# EUROPEAN PATENT SPECIFICATION

(11) **EP 3 428 676 B1**
(45) Date of publication and mention of the grant of the patent: **18.12.2019**
(21) Application number: 16893484.2
(22) Date of filing: 09.03.2016
(51) Int. Cl.: G01S 7/282, F42B 15/01, F41G 7/22, G01S 13/88, G01S 13/22

(54) **RADAR DEVICE AND RADAR SIGNAL PROCESSING METHOD**
RADARVORRICHTUNG UND RADARSIGNALVERARBEITUNGSVERFAHREN
DISPOSITIF RADAR ET PROCÉDÉ DE TRAITEMENT DE SIGNAL RADAR

(43) Date of publication of application: 16.01.2019
(73) Proprietor: Mitsubishi Electric Corporation, Chiyoda-ku Tokyo 100-8310 (JP)
(72) Inventor: NONAKA, Yasuhide, Tokyo 100-8310 (JP)
(74) Representative: Zech, Stefan Markus
(86) International application number: PCT/JP2016/057463
(87) International publication number: WO 2017/154154

(56) References cited:
- JP-A- S5 842 984
- JP-A- S5 842 984
- JP-A- S5 896 264
- JP-A- S5 896 264
- JP-A- 2010 256 027

## Description

### Field

The present invention relates to an active homing radar device that uses a radar wave generated thereby and to a method of processing radar signals.

### Background

Guidance (particularly, terminal guidance) systems for flying vehicles such as missiles are mainly active homing systems that use radar waves generated by the systems themselves. An active homing system is disclosed in detail in Patent Literature 1 listed below.

### Citation List

### Patent Literature

Japanese Patent Application Laid-open No. H9-236400

### Summary

### Technical Problem

Improvement in the average transmission power is an effective method of extending detection distances, and thus a High Pulse Repetition Frequency system (hereinafter, "HPRF system") with a high duty ratio and high average power transmission is especially effective as an active homing radar device to handle an approaching target (also referred to as "head aspect target", which is hereinafter used in the specification). Therefore, HPRF systems are often employed for this purpose.

However, a missile in which an active homing radio seeker is mounted needs to deal, not only with a head aspect target, but also with a departing target (also referred to as "tail aspect target", which is hereinafter used in the specification). For the tail aspect target, because the relative approaching velocity between the target and the missile is lower when compared to the head aspect target, a longer time is required for the missile to collide with the target. However, when the time until collision becomes long, the time required to irradiate a radio wave, i.e., the radar-wave transmission time, also becomes longer. Thus, the radar-wave transmission time is often determined by the time required until the collision. Furthermore, a longer radar-wave transmission time leads to a need for increased radar-wave transmission battery capacity and thus an increase in the battery size. Further, a cooling mechanism to cope with an increase in the amount of heat generated by the transmission system of the radio seeker is required. As a result, transmission of a radar wave over a longer period of time has become one of the causes of an increase in the size of radio seekers. In view of the overall missile performance, an increase in the size of the radio seeker leads to disadvantages such as degradation in the flying performance caused by, for example, a less amount of fuel that is loaded. In other words, the size and performance of the radar device, including such as the total amount of heat generated by the radio seeker during radio-wave transmission and the battery capacity needed for radio-wave transmission, largely depend on constraints imposed for dealing with a tail aspect target.

The objective of the present invention, in view of the above problems, is to provide a radar device that can handle both a head aspect target and a tail aspect target without degrading the detection performance and tracking performance of the head aspect target and that can also minimize an increase in the device size and performance.

### Solution to Problem

In order to solve the above problems and achieve the objective, the present invention provides an active homing radar device that uses a radar wave generated thereby, the radar device comprising: an antenna device to irradiate a target with the radar wave; a receiver to receive, via the antenna device, a reflected wave from the target; and a signal processor to perform coherent integration processing on a reception signal from the receiver, to observe the clutter level by using a signal on which the coherent integration processing has been performed, and to control the transmission duty ratio such that the clutter level observed becomes equal to or closer to the receiver noise level.

### Advantageous Effects of Invention

According to the present invention, there is an effect where it is possible to handle both a head aspect target and a tail aspect target without degrading the detection performance and tracking performance of the head aspect target and to also minimize an increase in the device size and performance.

### Brief Description of Drawings

FIG. 1 is an explanatory diagram explaining the concept of an active homing system.
FIG. 2 is a block diagram illustrating an example configuration of a radar device according to an embodiment of the present invention.
FIG. 3 is a flowchart explaining transmission duty control according to the embodiment.
FIG. 4 is a diagram illustrating a transmission-reception pattern that explains transmission duty control according to the embodiment.
FIG. 5 is an explanatory diagram illustrating how the clutter level varies under transmission duty control.
FIG. 6 is an explanatory diagram illustrating how the reception environment changes under transmission duty control according to the embodiment.
FIG. 7 is a diagram illustrating a conventional transmission-reception pattern as a comparative example in which transmission duty control is not executed.
FIG. 8 is an explanatory diagram illustrating a conventional reception environment in which transmission duty control is not executed.
FIG. 9 is a diagram illustrating an example of a hardware configuration in which respective processing units of a signal processor are implemented by software according to the embodiment.

### Description of Embodiments

A radar device and a processing method of a radar signal according to an embodiment of the present invention will be described in detail below with reference to the accompanying drawings. The present invention is not limited to the embodiment.

### Embodiment

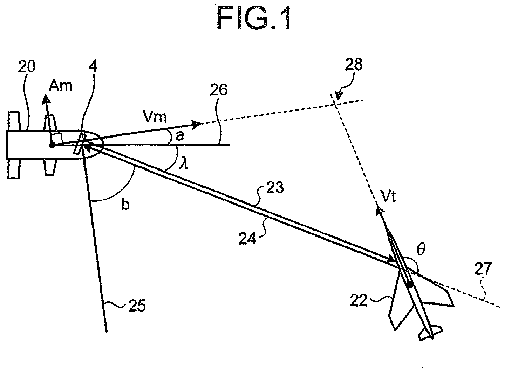

First, the concept of an active homing system is described with reference to FIG. 1. FIG. 1 is an explanatory diagram for explaining the concept of the active homing system.

In FIG. 1, an antenna device 4 and a control device (not illustrated) are mounted in a flying vehicle 20. The flying vehicle 20 flies at a velocity Vm in an angular direction at an angle of attack "a" relative to an axial direction 26 of the flying vehicle 20 in order to intercept a target 22. The flying vehicle 20 transmits a radar transmission wave 23 from the antenna device 4 toward the target 22 flying at a velocity Vt, and it receives a reflected wave from the target 22 as a radar reception wave 24.

The control device in the flying vehicle 20 calculates a visual line angle "b" from an angular difference between a preset reference line 25 and a visual line 27 that is the direction from which the antenna device 4 receives the radar reception wave 24. The control device then calculates the rate of change in the visual line angle "b" from a change in the angular difference over time. The control device then calculates an aspect angle θ from the angular difference between the visual line 27 and the traveling direction of the target 22. The control device then calculates an antenna swing angle λ in the antenna device 4 from the angular difference between the axial direction 26 and the visual line 27. The control device then calculates the relative velocity between the target 22 and the flying vehicle 20 by using information on the frequency difference between the radar transmission wave 23 transmitted from the antenna device 4 and the radar reception wave 24 received by the antenna device 4, i.e., by using a Doppler frequency. The control device then calculates the distance between the target 22 and the flying vehicle 20 by using information on the time difference between when the antenna device 4 transmits the radar transmission wave 23 and when the antenna device 4 receives the radar reception wave 24.

The flying vehicle 20 collides with the target 22 at a collision point 28, which is the intersection of the traveling direction of the target 22 and the flying vehicle 20. Thus, the control device in the flying vehicle 20 corrects the velocity Vm of the flying vehicle 20 in accordance with the behavior of the target 22, and it generates an acceleration Am in a direction perpendicular to the traveling direction of the flying vehicle 20 so as to continuously correct the path of the flying vehicle 20 in order to intercept the target 22.

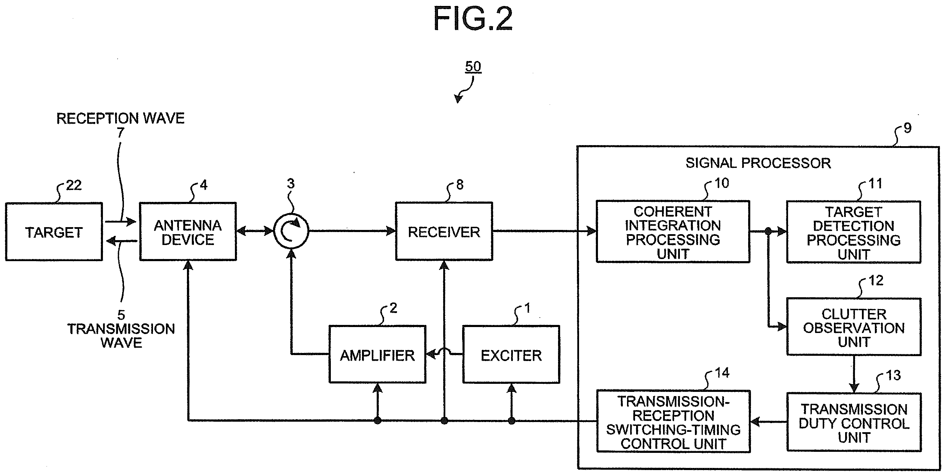

Next, a radar device according to the present embodiment is described. FIG. 2 is a block diagram illustrating an example configuration of the radar device according to the present embodiment.

As illustrated im FIG. 2, a radar device 50 according to the present embodiment includes an exciter 1, an amplifier 2, a circulator 3, the antenna device 4, a receiver 8, and a signal processor 9. The signal processor 9 includes a coherent integration processing unit 10, a target detection processing unit 11, a clutter observation unit 12, a transmission duty control unit 13, and a transmission-reception switching-timing control unit 14.

The exciter 1 generates a pulse-modulated signal that becomes the source of a transmission wave 5. The amplifier 2 amplifies a signal generated by the exciter 1. The circulator 3 transmits a signal from the amplifier 2 to the antenna device 4 and transmits a signal received from the antenna device 4 to the receiver 8. The antenna device 4 irradiates the target 22 with a signal transmitted via the circulator 3 as the transmission wave 5.

The transmission wave 5 is reflected by the target 22 and is received by the antenna device 4 as a reception wave 7. The reception wave 7 received by the antenna device 4 is transmitted to the receiver 8 via the circulator 3 as a reception signal. The receiver 8 includes a plurality of narrow band filters, an amplifier, and the like (not illustrated) to perform reception processing such as amplification and filtering using each of the narrow band filters.

In the receiver 8, a radar signal having undergone reception processing is discriminated into a plurality of signals corresponding to the respective narrow band filters, and the signals are transmitted to the signal processor 9. The coherent integration processing unit 10 performs coherent integration processing on spectrums of the signals discriminated by the respective narrow band filters. The target detection processing unit 11 calculates the distance to the target 22, the relative velocity between the target 22 and the vehicle itself, the bearing of the target 22, and the like with respect to the signals having undergone coherent integration processing. The clutter observation unit 12 uses the signals having undergone the coherent integration processing to calculate the clutter reception power level (hereinafter, referred to as "clutter level"). At least one of the pieces of the clutter level information is transmitted to the transmission duty control unit 13. The transmission duty control unit 13 generates a signal for controlling the transmission duty that is a ratio between a radar-signal transmission time and a radar-signal transmission cycle (hereinafter, referred to as "transmission duty control signal") in accordance with the observed clutter level, and then the transmission duty control unit 13 transmits the generated signal to the transmission-reception switching-timing control unit 14. The transmission-reception switching-timing control unit 14 uses the transmission duty ratio related the information included in the transmission duty control signal to control the exciter 1, the amplifier 2, the antenna device 4, and the receiver 8 in such a manner that the transmission duty ratio of the radar transmission wave 23 becomes a desired transmission duty ratio.

In the above descriptions, explanations of processing to calculate control information, steering information, and the like for guiding the flying vehicle 20 to the target 22 are omitted. However, it is fully understood that a processing unit and a control unit that perform the above calculation processing are configured within the flying vehicle 20.

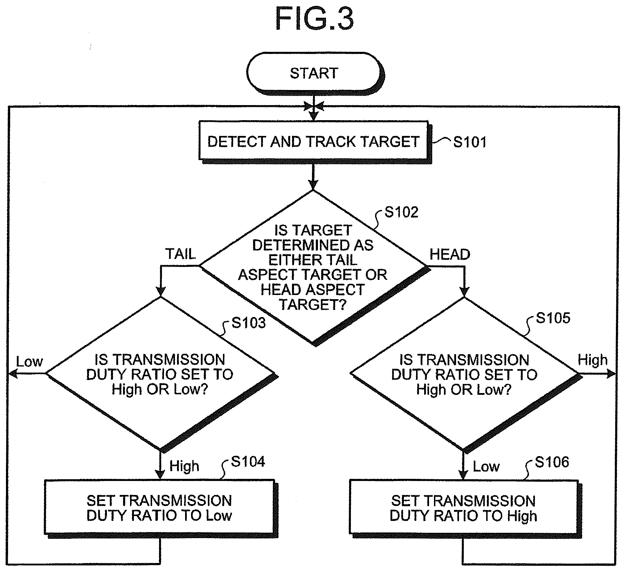

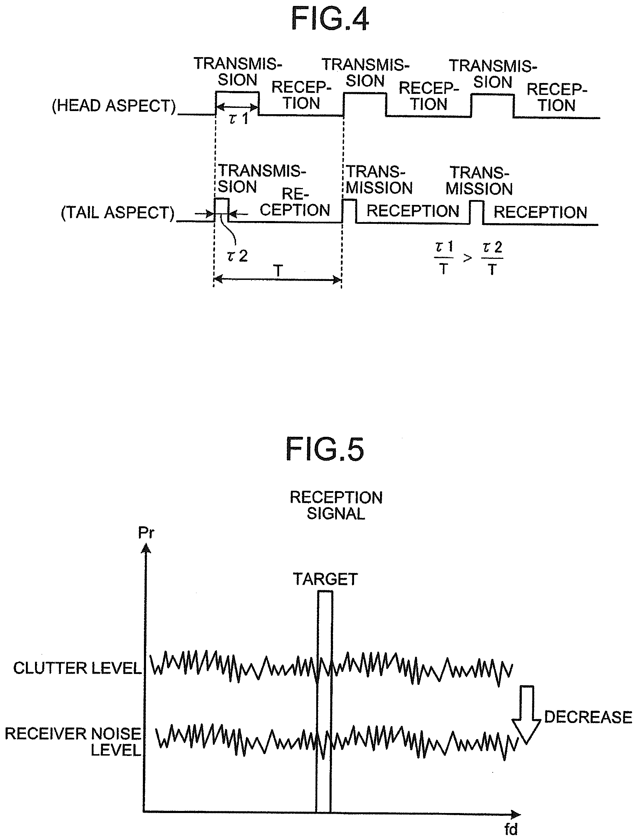

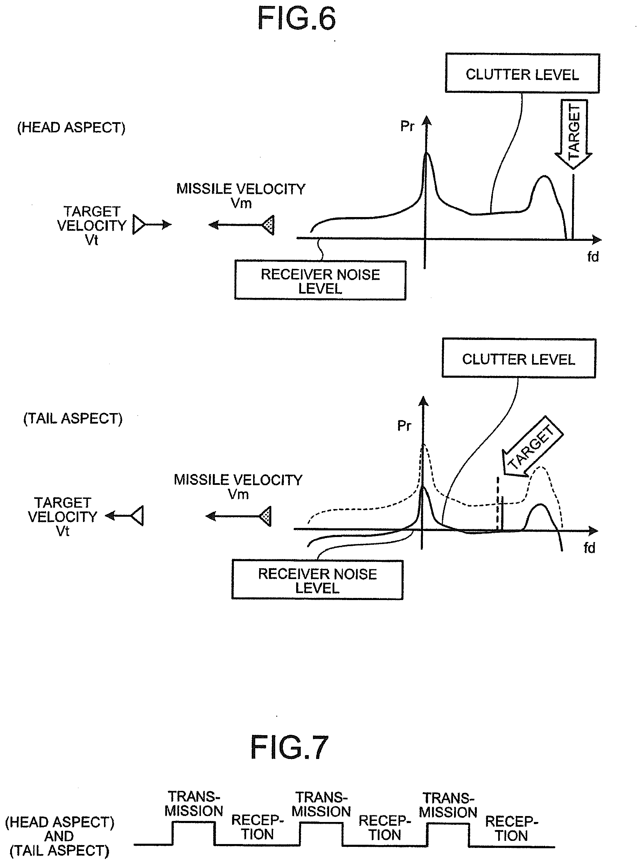

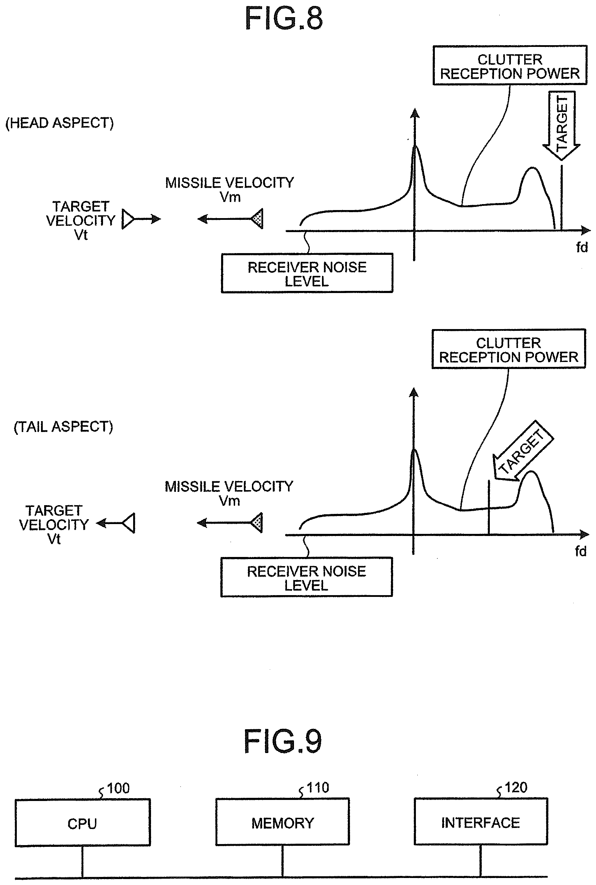

Next, an operation of the radar device according to the present embodiment is described with reference to FIGS. 1 to 8 as appropriate. FIG. 3 is a flowchart illustrating the transmission duty control according to the present embodiment. FIG. 4 is a diagram illustrating a transmission-reception pattern that illustrates the transmission duty control according to the present embodiment. FIG. 5 is an explanatory diagram illustrating how the clutter level varies under the transmission duty control. FIG. 6 is an explanatory diagram illustrating how the reception environment changes under the transmission duty control according to the present embodiment. FIG. 7 is a diagram illustrating a conventional transmission-reception pattern as a comparative example in which transmission duty control is not executed. FIG. 8 is an explanatory diagram illustrating a conventional reception environment in which transmission duty control is not executed.

In FIG. 3, the radar device 50 detects and tracks a target (Step S101). The radar device 50 determines whether a target to be dealt with is a tail aspect target or a head aspect target (Step S102). The determination of whether the target is a tail aspect target or a head aspect target is performed on the basis of the magnitude relation between a detection-target Doppler frequency and a Doppler frequency generated by the missile velocity of the vehicle itself. When the component of the velocity Vt in the direction of the visual line 27 approaches the flying vehicle 20, the radar device 50 determines that the target is a head aspect target. When the component of the velocity Vt in the direction of the visual line 27 departs from the flying vehicle 20, the radar device 50 determines that the target is a tail aspect target.

When it is determined that the target is a tail aspect target at Step S102, the processing flow shifts to Step S103. The radar device 50 identifies the currently-set transmission duty ratio (Step S103). When the set transmission duty ratio is "High", the radar device 50 sets the transmission duty ratio to "Low" (Step S104). When the set transmission duty ratio is "Low", the transmission duty ratio remains "Low" and the processing flow is continued from Step S101.

In contrast, when it is determined that the target is a head aspect target at Step S102, the processing flow shifts to Step S105. The radar device 50 identifies the currently-set transmission duty ratio (Step S105). When the set transmission duty ratio is "Low", the radar device 50 sets the transmission duty ratio to "High" (Step S106). When the set transmission duty ratio is "High", the transmission duty ratio remains "High" and the processing flow is continued from Step S101.

A state of the transmission duty control at this time is illustrated in FIG. 4. The transmission duty ratio (τ1/T) for a head aspect target is set greater than the transmission duty ratio (τ2/T) for a tail aspect target.

The clutter level is observed in the HPRF system under a clutter environment. When the transmission duty ratio is low, the transmission power per cycle is reduced. Thus, the clutter level is decreased over the entire frequency range, as illustrated in FIG. 5. The radar device 50 according to the present embodiment actively utilizes such a phenomenon as described above. Specifically, the radar device 50 constantly observes the clutter level. When the clutter level from a tail aspect target is higher than a receiver noise level, the radar device 50 controls the transmission duty ratio so as to decrease it such that the clutter level becomes equal to or closer to the receiver noise level in order to decrease the average transmission power. Power saving is thereby achieved while still ensuring appropriate detection performance under a clutter environment.

A reception environment for a head aspect target is illustrated in the upper section of FIG. 6. FIG. 6 illustrates the relation of a reception power Pr relative to a Doppler frequency fd. As illustrated in FIG. 6, in the HPRF system, as the relative velocity between the vehicle itself and the target is greater than the relative velocity between the vehicle itself and the clutter, they can be separated in the Doppler frequency fd,, which can prevent detection of the target from being affected by the clutter.

In contrast, a reception environment for a tail aspect target is illustrated in the lower section of FIG. 6. In the case of a tail aspect target, as the transmission duty ratio is controlled such that it becomes lower, the target reception power level is reduced. Further, in the case of the tail aspect target, the relative velocity is lower, and thus a target detection area in a frequency domain falls within a clutter area. However, because the transmission duty ratio is lower, the clutter level is also reduced. With the transmission duty control according to the present embodiment, the transmission duty ratio is controlled such that the clutter level becomes equal to or closer to the receiver noise level so that the target can be detected as long as its reception power level is not buried in the receiver noise level. Therefore, under the transmission duty control according to the present embodiment, it is possible to ensure a certain level or higher of detection performance and tracking performance of a tail aspect target.

FIGS. 7 and 8 illustrate a conventional transmission-reception pattern and a reception environment as a comparative example in which transmission duty control is not executed. As illustrated in the upper section of FIG. 8, in the case of a head aspect target, the relative velocity between a vehicle itself and a target can be separated in the Doppler frequency fd. However, in the case of a tail aspect target, as there is clutter at the same level as the relative velocity between the vehicle itself and the target, there is a range in which the target cannot be detected, and thus extension of a detectable distance and improvement in the tracking performance cannot be achieved.

As described above, the radar device according to the present embodiment constantly observes the clutter level in an HPRF system under a clutter environment. Simultaneously, the radar device determines whether a target to be dealt with is a tail aspect target or a head aspect target. When the target to be dealt with is determined to be a tail aspect target, the radar device controls the transmission duty ratio so that it is decreased such that the clutter level becomes equal to or closer to the receiver noise level. Thus, it is possible to reduce the total amount of heat generated in the radio seeker during radio-wave transmission and to reduce the battery capacity and the like needed for the radio-wave transmission. With this configuration, at the time of dealing with a tail aspect target that requires a longer transmission time, the transmission power capacity and the amount of generated heat can be reduced. As a result, the radio-wave transmission battery is downsized and the thermal structure is simplified. As the transmission duty ratio is decreased, the reception area is increased. Thus, an effect of slightly extending the detectable distance is achieved.

Finally, there is a supplementary description of the effect of extending the detectable distance. As a specific example, a case where the transmission duty is decreased from 1/3 to 1/12 is described. In this case, the average transmission power is reduced to 1/4. Consequently, the transmission power capacity and the amount of generated heat can also be reduced to 1/4 as compared to those of the conventional device. This makes it possible to downsize the device.

When a transmission pulse width and a reception gate width are made identical to each other and the transmission pulse width is defined as "1", the number of reception gates M1 before the transmission duty ratio is changed becomes 2 (=3-1), which is obtained by subtracting the transmission pulse width "1" from the length per cycle "3". In contrast thereto, after the transmission duty ratio is changed, the number of reception gates M2 becomes 11 (=12-1), which is obtained by subtracting the transmission pulse width "1" from the length per cycle "12". Non Patent Literature "RADAR HANDBOOK SECOND EDITION" (Merrill I. Skolnik McGraw-Hill Publishing Company in 1990) shows in FIG. 16 (Loss factor for M contiguous range gate) that the average loss with an eclipse taken into account is improved by approximately 1.1 dB, which results in an effect of extending the detectable distance to a distance that is approximately 1.06 times longer.

Finally, a hardware configuration of the signal processor 9 according to the present embodiment when its respective processing units are implemented by software is described with reference to FIG. 9. The respective processing units described here are the coherent integration processing unit 10, the target detection processing unit 11, the clutter observation unit 12, the transmission duty control unit 13, and the transmission-reception switching-timing control unit 14, all of which are illustrated in FIG. 2.

In a case where functions of the respective processing units in the signal processor 9 are implemented by software, the signal processor 9 can be configured to include a Central Processing Unit (CPU) 100 that performs calculation, a memory 110 that stores therein programs to be read by the CPU 100, and an interface 120 that inputs and outputs a signal, as illustrated in FIG. 9. The CPU 100 can be a device referred to as an arithmetic device, a microprocessor, a microcomputer, a processor, a Digital Signal Processor (DSP), and the like. Further, the memory 110 corresponds to, for example, a nonvolatile or volatile semiconductor memory such as a Random Access Memory (RAM), a Read Only Memory (ROM), a flash memory, an Erasable Programmable ROM (EPROM), or an Electrically EPROM (EEPROM).

Specifically, programs to implement the functions of the respective processing units in the signal processor 9 are stored in the memory 110. The CPU 100 transmits and receives necessary information through the interface 120 in order to perform various types of computation processing and control processing, which have been described in the present embodiment.

It is permissible that the CPU 100 and the memory 110 illustrated in FIG. 9 are replaced by a processing circuit. The processing circuit corresponds to, for example, a single circuit, a composite circuit, a programmed processor, a parallel-programmed processor, an Application Specific Integrated Circuit (ASIC), a Field-Programmable Gate Array (FPGA), or a combination thereof.

As described above, the radar device according to the present embodiment observes the clutter level by using a signal obtained by performing coherent integration processing on a reception signal from the receiver, and it then controls the transmission duty ratio such that the observed clutter level becomes equal to or closer to a receiver noise level. Thus, at the time of dealing with a tail aspect target that requires a longer transmission time, the transmission power capacity and the amount of generated heat can be reduced. Consequently, it is possible to downsize a battery for transmission and simplify the thermal structure.

The radar device according to the present embodiment determines whether a target to be dealt with is a tail aspect target or a head aspect target. When the target is a tail aspect target, the radar device reduces the transmission duty ratio compared to when the target is a head aspect target. Thus, at the time of dealing with a tail aspect target, which requires a longer transmission time, the transmission power capacity and the amount of generated heat can be reduced. It is possible that the size and performance of the radar device, such as the total amount of heat generated in the radio seeker during radio-wave transmission and the battery capacity needed for radio-wave transmission, does not become a constraint on dealing with a tail aspect target. Further, it is possible to slightly extend the detectable distance of a tail aspect target.

The configurations described in the above embodiment are only examples of the content of the present invention.

### Reference Signs List

1 exciter, 2 amplifier, 3 circulator, 4 antenna device, 5, 23 transmission wave, 7, 24 reception wave, 8 receiver, 9 signal processor, 10 coherent integration processing unit, 11 target detection processing unit, 12 clutter observation unit, 13 transmission duty control unit, 14 transmission-reception switching-timing control unit, 20 flying vehicle, 22 target, 25 reference line, 26 axial direction, 27 visual line, 28 collision point, 50 radar device, 110 memory, 120 interface.

## Claims

1. An active homing radar device mounted in a flying vehicle (20) using a radar wave generated thereby, the radar device comprising:
an antenna device (4) to irradiate a target with the radar wave;
a receiver (8) to receive a reflected wave from the target through the antenna device (4); and
a signal processor (9) to perform coherent integration processing on a reception signal from the receiver (8),
to observe a clutter level by using a signal on which the coherent integration processing has been performed, and
to control a transmission duty ratio such that a clutter level observed becomes equal to or closer to a receiver noise level, wherein
the radar device determines whether a target to be handled is departing from the vehicle (20) or approaching the vehicle (20), and
when the target is departing from the vehicle (20), the radar device reduces the transmission duty ratio compared to when the target is approaching the vehicle (20).

2. A processing method of a radar signal transmitted and received in an active homing radar device mounted in a flying vehicle (20), the processing method comprising:
a first step of receiving a reflected wave from a target;
a second step of performing coherent integration processing on a signal received at the first step;
a third step of observing a clutter level by using a signal on which the coherent integration processing has been performed at the second step;
a fourth step of determining whether the target to be handled is departing from the vehicle (20) or approaching the vehicle (20); and
a fifth step of controlling a transmission duty ratio such that the clutter level observed at the third step becomes equal to or closer to a receiver noise level when the target to be handled is determined to be departing from the vehicle (20) at the fourth step.

## Patentansprüche

1. Aktivzielflug-Radarvorrichtung, die in einem fliegenden Fahrzeug (20) unter Verwendung einer dabei erzeugten Radarwelle montiert ist, wobei die Radarvorrichtung umfasst:
eine Antennenvorrichtung (4), um ein Ziel mit der Radarwelle zu bestrahlen;
einen Empfänger (8), um eine vom Ziel durch die Antennenvorrichtung (4) reflektierte Welle zu empfangen; und
einen Signalprozessor (9), um eine kohärente Integrationsverarbeitung an einem Empfangssignal aus dem Empfänger (8) durchzuführen,
um einen Stördatenpegel zu beobachten, indem ein Signal verwendet wird, an dem die kohärente Integrationsverarbeitung durchgeführt wurde, und
um eine relative Übertragungseinschaltdauer so zu steuern, dass ein beobachteter Stördatenpegel gleich einem Empfängerrauschpegel wird oder diesem näher kommt, wobei
die Radarvorrichtung bestimmt, ob ein Ziel, mit dem umgegangen werden soll, sich von dem Fahrzeug (20) entfernt oder sich dem Fahrzeug (20) nähert, und
wenn sich das Ziel vom Fahrzeug (20) entfernt, die Radarvorrichtung die Übertragungseinschaltdauer im Vergleich dazu reduziert, dass sich das Ziel dem Fahrzeug (20) nähert.

2. Verarbeitungsverfahren für ein Radarsignal, das übertragen und in einer Aktivzielflug-Radarvorrichtung empfangen wird, die in einem fliegenden Fahrzeug (20) montiert ist, wobei das Verarbeitungsverfahren umfasst:
einen ersten Schritt, bei dem eine von einem Ziel reflektierte Welle empfangen wird;
einen zweiten Schritt, bei dem eine kohärente Integrationsverarbeitung an einem im ersten Schritt empfangenen Signal durchgeführt wird;
einen dritten Schritt, bei dem ein Stördatenpegel beobachtet wird, indem ein Signal verwendet wird, an dem die kohärente Integrationsverarbeitung im zweiten Schritt durchgeführt wurde;
einen vierten Schritt, bei dem bestimmt wird, ob ein Ziel, mit dem umgegangen werden soll, sich von dem Fahrzeug (20) entfernt oder sich dem Fahrzeug (20) nähert; und
einen fünften Schritt, bei dem eine Übertragungseinschaltdauer so gesteuert wird, dass der im dritten Schritt beobachtete Stördatenpegel gleich einem Empfängerrauschpegel wird oder diesem näher kommt, wenn im vierten Schritt bestimmt wird, dass sich das Ziel, mit dem umgegangen werden soll, vom Fahrzeug (20) entfernt.

## Revendications

1. Dispositif radar d'autopoursuite active monté dans un véhicule (20) volant utilisant une onde radar générée à cette occasion, le dispositif radar comprenant :
un dispositif d'antenne (4) pour irradier une cible avec l'onde radar ;
un récepteur (8) pour recevoir une onde réfléchie depuis la cible via le dispositif d'antenne (4) ; et
une unité de traitement de signal (9) pour effectuer un traitement d'intégration cohérente sur un signal de réception provenant du récepteur (8),
pour observer un niveau de fouillis en utilisant un signal sur lequel le traitement d'intégration cohérente a été effectué, et
pour commander un rapport cyclique d'émission de telle sorte qu'un niveau de fouillis observé devienne égal ou proche d'un niveau de bruit de récepteur, sachant que
le dispositif radar détermine si une cible devant être traitée s'éloigne du véhicule (20) ou s'approche du véhicule (20), et
lorsque la cible s'éloigne du véhicule (20), le dispositif radar réduit le rapport cyclique d'émission en comparaison avec le cas où la cible s'approche du véhicule (20).

2. Procédé de traitement d'un signal radar émis et reçu dans un dispositif radar d'autopoursuite active monté dans un véhicule (20) volant, le procédé de traitement comprenant :
une première étape consistant à recevoir une onde réfléchie depuis une cible ;
une deuxième étape consistant à effectuer un traitement d'intégration cohérente sur un signal reçu à la première étape ;
une troisième étape consistant à observer un niveau de fouillis en utilisant un signal sur lequel le traitement d'intégration cohérente a été effectué à la deuxième étape ;
une quatrième étape consistant à déterminer si la cible devant être traitée s'éloigne du véhicule (20) ou se rapproche du véhicule (20) ; et
une cinquième étape consistant à commander un rapport cyclique d'émission de telle sorte que le niveau de fouillis observé à la cinquième étape devienne égal ou proche d'un niveau de bruit de récepteur lorsqu'il a été déterminé à la quatrième étape que la cible devant être traitée s'éloigne du véhicule (20).
